# EUROPEAN PATENT SPECIFICATION

(11) **EP 1 554 507 B1**
(45) Date of publication and mention of the grant of the patent: **19.04.2006**
(21) Application number: 03788932.6
(22) Date of filing: 03.10.2003
(51) Int. Cl.: F16G 5/16

(54) **DRIVE BELT WITH TRANSVERSE ELEMENTS AND STAMPING DEVICE FOR PRODUCING TRANSVERSE ELEMENTS**
TREIBRIEMEN MIT QUERELEMENTEN UND STANZVORRICHTUNG ZUM HERSTELLEN VON QUERELEMENTEN
COURROIE D'ENTRAINEMENT A ELEMENTS TRANSVERSAUX ET DISPOSITIF D'ESTAMPAGE POUR PRODUIRE DES ELEMENTS TRANSVERSAUX

(30) Priority: 16.10.2002 NL 1021661
(43) Date of publication of application: 20.07.2005
(73) Proprietor: Van Doorne's Transmissie B.V., 5000 AM Tilburg (NL)
(72) Inventor: LITH, Johannes, Hendrikus, NL-5258 PL Berlicum (NL); LIEMPD, Jeroen, Herman, NL-4854 RM Bavel (NL); PRINSEN, Lucas, Hendricus, Robertus, Maria, NL-5175 AC Loon Op Zand (NL)
(86) International application number: PCT/EP2003/010938
(87) International publication number: WO 2004/036083

(56) References cited:
- EP-A- 0 278 545
- EP-A- 1 061 285
- EP-A- 1 069 341
- US-A- 4 826 473
- PATENT ABSTRACTS OF JAPAN vol. 2002, no. 11, 6 November 2002 (2002-11-06) -& JP 2002 213539 A (NISSAN MOTOR CO LTD), 31 July 2002 (2002-07-31)

## Description

The present invention relates to a drive belt as described in the preamble of Claim 1 below.

Drive belts of this type are generally known. One example is formed by Japanese Patent Application 260206/1986, filed on 30 October 1986. In this example, the drive belt which is known per se comprises transverse elements, also referred to in that document as transverse elements, with a main surface designed for contact, which incorporates minimal thickened portions. The thickened portions promote the correct bearing of the transverse elements against one another and improves their production. In the case of transverse elements with a relatively minor deviation in thickness with respect to the intended thickness of the transverse element, i.e. the dimension of the transverse element as seen perpendicular to its main surface in the peripheral direction of the drive belt, the situation may arise that the drive belt, as seen over a multiplicity of transverse elements of this type, deviates from an intended substantially straight line. Put in layman's terms, the drive belt, when used in a set of driving wheels of a transmission, is then inclined, at the transition from a first driving wheel to the second driving wheel, to adopt a path which is curved to an undesirable extent or in an undesired direction. A deviation of this nature is unfavourable, since the drive belt is forced into a straight path by the driving wheels, which causes internal material stresses and therefore may have an adverse effect on the service life of the belt. The phenomenon outlined above is in this context also referred to as the straight-on stability of the drive belt.

The risk of deviations in the thickness of the transverse element is already limited by numerous measures even while it is being produced, and this property is also stringently monitored. Inter alia in order to limit the number of contact regions between two transverse elements, which contact regions determine the thickness, or to make it easier to check for deviations in thickness, a limited number of thickened portions have been formed in at least one main surface, for example as in the above mentioned Japanese patent document. In this example, the thickened portions or contact regions are arranged in the head part of the transverse element, i.e. that part of the transverse element which projects radially beyond the belt cord assemblies, in the web part of the transverse element, i.e. in that part located between the two belt cord assemblies, and in the foot part of the transverse element, i.e. that part of the transverse element which is located radially inside the belt cord assemblies. In total, in this example, five contact regions are present. In addition to the fact that the number of contact regions whose thickness has to be checked is still considerable, this configuration is also less than optimum in technical terms, since contact between two objects is in principle already defined by three bearing points. One example of a transverse element and drive belt which have been improved on the basis of the latter insight is given in the relatively recent European Patent Application EP 1061285. A further example thereof is known from the European patent publication EP 0278545. Although the measure from these known examples can be used to enhance the straight-on stability in a relatively simple way, further improvements or modifications to the transverse element are desirable, inter alia with a view to optimum functioning of the drive belt and advantageous manufacture of the transverse elements used therein.

According to the invention, an improvement of this nature is achieved by using the measures from the characterising part of Claim 1.

By using a design having the prescribed contact between adjacent transverse elements, i.e. a three-point bearing with two thickened portions or contact regions, i.e. contact islands located in relatively elevated positions, in the foot part of the transverse element, and with the third contact region in the head part of the transverse element, it is ensured that the straight-on stability of the transverse element and therefore the drive belt during its operation is present from the moment at which the drive belt is clamped between the driving wheels of a transmission, i.e. the contact with the driving wheels which controls the transverse elements advantageously takes place in the vicinity of two of the three contact regions on the transverse elements. This measure prevents relatively high internal stresses from occurring in the transverse elements as a result of the couple of forces between the forces between the transverse elements at the location of the contact regions and the forces resulting from the damping and the driving by the driving wheels advantageously being reduced, compared to the known design of the drive wheel. This leads, inter alia, to the forces which have been produced for the purpose of applying the straight-on stability being reduced, and thereby also the internal stresses in the transverse element. To further improve the design according to the invention, the two contact regions in the foot part each have to be arranged adjoining an axial contact surface of the transverse element, so that the said couple of forces is minimal. Moreover, the load which acts on the relatively soft head part of the transverse element during the transition between the driving wheels is also reduced, on account of the fact that only one of the three contact regions is located there, and moreover this contact region is located centrally and in the vicinity of the neck part, rather than at the ends of the head parts which extend axially freely - i.e. beyond the web part - and are also known as the lugs of the transverse element, and which can bend or even break off relatively easily with respect to other parts of the transverse element. The measure according to the invention allows various other structural advantages to be implemented in the design of the transverse element, and these are also therefore incorporated as particular embodiments as part of the present invention.

The design according to the invention is also favourable because it can be executed using an ingenious and novel way of stamping which is relatively easy and has particular advantages. According to this new technique, the contact regions are produced by thinning the transverse element at the other locations by means of material displacement or by making special use of what is known as the contraction effect during stamping. One example of the proposed method of stamping is for the stamping tool required to be of relatively simple design, i.e. at least to be provided with an otherwise planar working surface with one centrally located, elevated working-surface part incorporated therein and connected up.

Special measures which can be incorporated in combination with the present invention comprise a possible reduction in the weight of the transverse element on account of the web part of the transverse element - i.e. the part between the axial cut-outs for the belt cord assemblies - being of relatively thinned design or by the lugs, at least seen in the vertical direction of the transverse element - i.e. as seen in the direction from the foot part towards the head part - being of smaller design. All this is now possible on account of the greatly reduced sensitivity of the web and lugs to stresses in the novel design. Moreover, the relative thinned portions contribute to determining the three-point bearing, while the relative thinning of the lugs also contributes to a reduced susceptibility to rejection during production of transverse elements.

Specifically, with regard to the latter effect, this means a reduction in the adverse effect that one end of a lug may have when the head part of a transverse element is already in a slightly twisted position with respect to the web part or foot part when there is contact between two transverse elements. A torsion effect of this nature may occur to a slight extent as a result of the need to heat and cool the transverse element during production. Since the lugs in the novel design substantially do not have any supporting function in the peripheral direction of the drive belt, this leads to a relatively considerable design freedom for the transverse elements, which in the present invention is exploited in accordance with the measures presented in the subclaims.

In the text which follows, the invention will be explained in more detail, by way of example, with reference to a drawing, in which:
Figure 1 shows a perspective view of a partially cut-away transmission in which the drive belt according to the invention is used;
Figure 2 shows a cross section in the peripheral direction through the drive belt, incorporating a front view of the transverse element according to the invention which represents the contours of a main surface thereof. The figure also shows a side view of the transverse element;
Figure 3 diagrammatically depicts a known stamping device used to produce transverse elements;
Figure 4 shows what is known as an ejector of a stamping machine which can be used to form the transverse element according to the invention;
Figure 5 diagrammatically depicts a stamping process for producing transverse elements according to the invention, the contraction effect of which is utilised in the invention;
Figures 7 and 8 show the front view corresponding to Figure 2 of a second and third embodiment of a transverse element according to the invention;
Figure 8 illustrates the torsion effect for a transverse element without and with thinned lugs.
Figures 9 shows the front view corresponding to Figure 2 of a fourth embodiment of a transverse element according to the invention;

Throughout the figures, corresponding structural transverse elements are denoted by identical reference numerals.

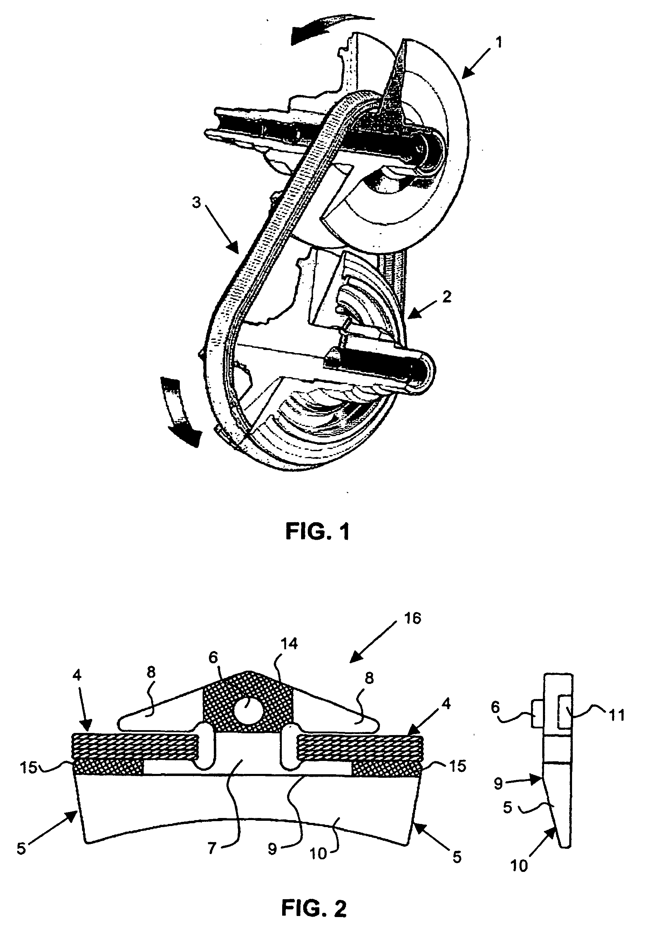

Figure 1 shows the central parts of a continuously variable transmission for driving, for example, passenger cars. The transmission is generally known per se and comprises at least a first and a second pair of discs, i.e. driving wheels 1, 2, and a drive belt 3 accommodated between the discs of the driving wheels 1 and 2. The discs of a driving wheel 1, 2 are formed conically, with at least one disc being arranged in such a manner that it can be displaced in the axial direction along an axle of the corresponding driving wheel 1, 2. For this purpose, electronically controllable and hydraulically acting displacement means are generally included in the transmission, but these means are not shown in the figure. The activation of these displacement means leads to an axial displacement of the respective disc and therefore to a radial adjustment of the position of the drive belt 3 between the discs of the driving wheels 1 and 2. The driving force of a driving wheel 1, 2 is transmitted by means of friction in the conical contact surfaces between the discs and the drive belt 3. In this example, both drive belt 3 and the driving wheels 1, 2 are made from metal.

Figure 2 shows a cross section in the circumferential direction through the drive belt 3 shown in Figure 1, including a front view of the transverse element 16, in a first embodiment according to the invention. The drive belt 3 also comprises two continuous carriers 4, which each comprise a set of nested flat metal rings and which bear the transverse elements 16 and are thereby able to absorb a radial component of the forces occurring between the drive belt 3 and a driving wheel 1, 2. The transverse elements 16 are incorporated in the drive belt 3 in such a manner that they can move freely in their peripheral direction with respect to the carriers 4. The view shown in this figure represents a cross section through the carriers 4 accommodated in the intended position and orientation with respect to one another. The right-hand part of Figure 2 shows a side view of the transverse element 16, i.e. as seen in the width direction or the axial direction of the drive belt.

Figure 2 also shows two axially oriented side faces 5 in a bottom or foot part of the transverse element 16 for contact with the driving wheels 1 and 2; a projecting boss 6 in a top or head part of the transverse element 16; a middle or web part 7 of the transverse element 16, which is present between the carriers 4; side parts or lugs 8 of the head part, which extend in the axial direction over the carrier 4; a so-called tilting line 9, beneath which the transverse element 16 decreases in thickness, in this case decreases gradually in thickness via a tapering surface 10. The side view referred to also shows a cut-out 11, in which the boss 6 of an adjoining transverse element 16 can be accommodated.

The carriers 4 are accommodated in slot-like cut-outs in the transverse element 16, which cut-outs are at least delimited by the foot part, the web part 7 and a lug 8 of the transverse element 16. The primary function of the lugs 8 is also therefore to limit the freedom of movement of the carriers 4 in the vertical direction or the radial direction of the drive belt. To successfully carry out this function, a lug 8 extends minimally in the axial direction to the centre of the carrier 4.

Furthermore, the transverse element 16 according to the invention is designed with three so-called contact regions 14, 15 which are shown in hatched form and are each formed by a successive surface which in relative terms is elevated with respect to other parts of the transverse element 16, i.e. where the thickness of the transverse element 16 is locally slightly greater. In this context, it may be advantageous if the thickness at the location of the top contact region 14 in the head part is in turn just slightly greater than the thickness at the location of the bottom contact region 15 in the foot part. All this is such that the contact regions 14 and 15 ensure that in the drive belt 3 the transverse elements 16 are always oriented at an angle, albeit a small angle, with respect to one another, which during use represents an advantageous and stable drive belt configuration. The top contact region 14 preferably extends around the boss 6, preferably starting at a certain distance therefrom, in the vertical direction preferably virtually from the underside of the lugs 8 to the top edge of the transverse element 16, and in the width direction preferably over at least virtually the entire width of the web part 7. The bottom contact regions 15 each, in the width direction, preferably extend virtually from one edge of the transverse element 16 at an axially oriented side face 5 over preferably half the axial dimension of the slot-like cut-out, and in the vertical direction preferably virtually from the tilting line 9 to an edge of the transverse element 16 at the slot-like cut-out. In accordance with the invention, the bottom contact regions 15, in the width direction, extend as far as possible towards the sides of the transverse element 16, which advantageously leads to stable contact between the transverse elements 16 and, moreover, makes it possible to successfully control the thickness of these regions 15. In all cases, the contact regions 14 and 15 are preferably formed by a relative thinning or a displacement or contraction of the material of the transverse element 16 during the process of forming the latter.

According to the invention, the way in which the contact regions 14 and 15 are formed in the configuration described above is of crucial importance to optimum functioning of a drive belt 3. Using three contact regions 14 and 15 ensures that a precisely defined, stable contact between adjacent transverse elements 16 is formed in drive belt 3, with the result that during use the drive belt can execute the transition between the driving wheels 1 and 2 in an advantageous way, i.e. along an intended trajectory and without undesirably high internal stresses. Moreover, the contact regions 14 and 15 ensure that the correct thickness of the transverse elements 16 can be controlled and monitored in a relatively simple way within very tight tolerances. On the one hand because this control and monitoring of the thickness only ever affects a relatively small part of the total surface of the main surface of the transverse element 16, specifically the contact regions 14 and 15, and on the other hand because the contact regions 14 and 15 can be produced by displacing or contracting material at other locations in the stamping process, so that the thickness of the basic material out of which the links are stamped, which has to be accurately checked and controlled and which, as it were, occurs automatically as a result of the necessary rolling of the material, corresponds to the thickness at the location of the contact regions 14 and 15. The major advantage of the latter method of production is that no local thickened portions have to be produced during stamping, which in principle could only be brought to the desired thickness with difficulty, meaning that high levels of scrap would occur or that a remachining process would be required, in which the transverse elements 16 are accurately brought to the correct size at least in the thickness direction, i.e. are suitably calibrated. Therefore, the stamping process according to the invention is also intended to maintain an existing thickness at specific locations, in this case the contact regions 14 and 15.

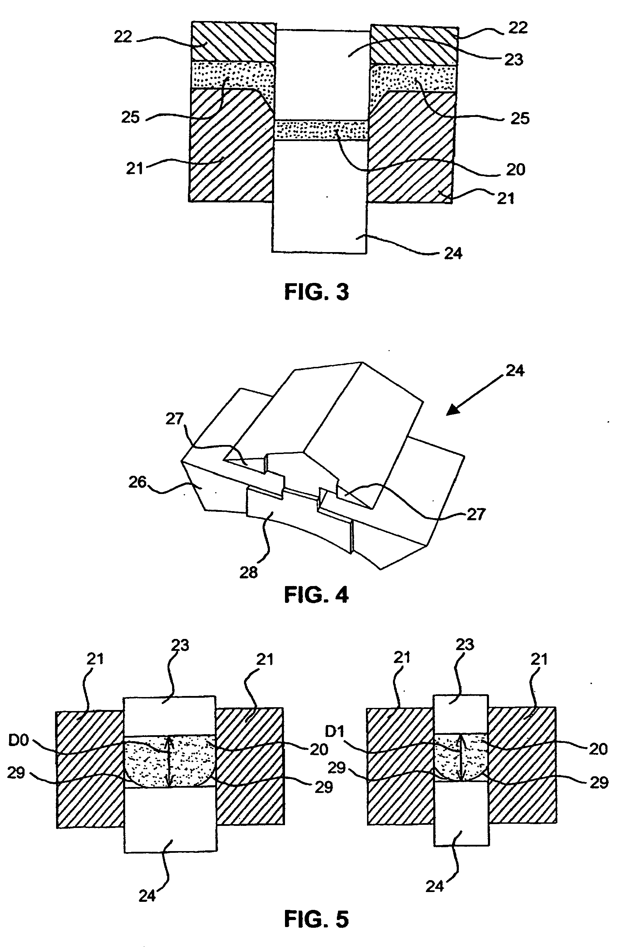

Figure 3 illustrates the known stamping device in cross section as is used for the production of the transverse element 16 from base material 25 in strip form. In the figure, a part 20 of a transverse element 16, for example a lug 8, which has been cut out of the base material 25, can be seen in cross section. For this purpose, the base material has been clamped between clamping parts 21, 22 of the stamping device, i.e. between a guide plate 22 and a cutting die 21 of the stamping device. The transverse element 16 which is to be formed, including its part 20, is in this case clamped between a punch 23 and an ejector 24. The force with which the ejector 24 pushes on the transverse element 16 is lower than that of the punch 23, so that the assembly comprising punch 23, ejector 24 and transverse element 16 moves downwards with respect to the clamping parts 21, 22, in such a manner that the transverse element 16 is cut out of base material 25 by the edges of the cutting die 21. It is known to use a certain play, known as the cutting gap, between the punch 23 and the cutting die 21. This is necessary in order to successfully cut out the transverse element 16. This stamping device and arrangement of the stamping process are known per se.

Departing from the known stamping process, the invention proposes forming the contact regions 14 and 15 on the transverse element during the stamping, by displacing the other parts of the transverse element 16 to some extent, during which operation the material to be displaced flows away, for example towards the edges of the transverse element 16 or towards the tapering surface 10. According to the invention, this displacement of material can be achieved using the ejector 24, which is indicated in a diagrammatic perspective view. The working surface 26 of the ejector 24 which is directed towards the transverse element 16 to be formed is for this purpose provided, at the location of the transverse element parts which are to be displaced, with elevated working-surface parts 27 and 28. As has already been stated, this method has considerable advantages which relate in particular to the accuracy and controllability of the thickness of the transverse element 16. One aspect of the invention is therefore that the contact regions 14 and 15 for a transverse element 16 are essentially formed by displacing the base material in regions which adjoin the main surface of the transverse element 16 during the forming process.

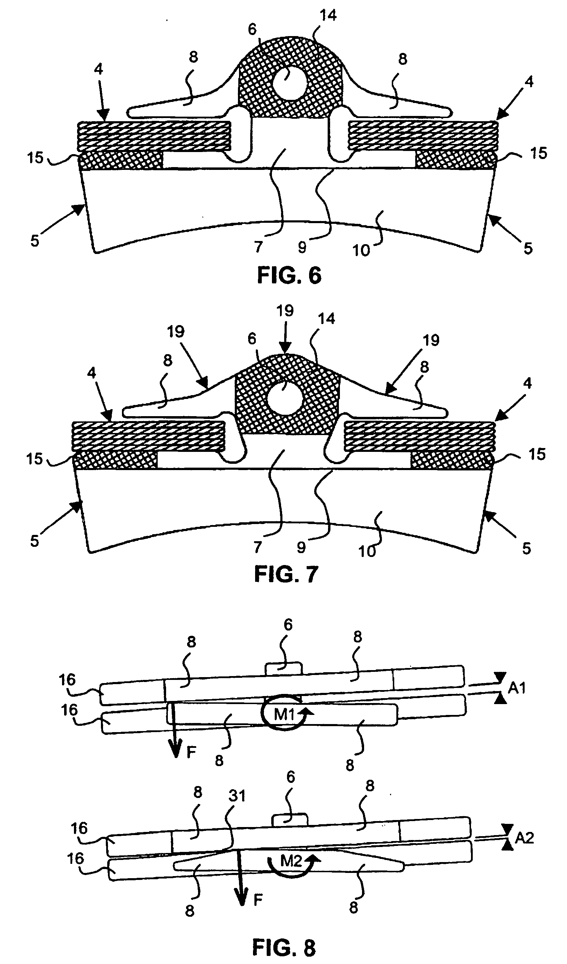

In a further embodiment of the invention, what is known as the contraction effect, as occurs in the known stamping process, is used in an unexpected and advantageous way. This contraction effect is illustrated in the left-hand part of Figure 5 and relates to the spontaneous formation of rounded or contracted edges 29 on the ejector 24 side of the stamped product during stamping, in this case the transverse element 16 and more particularly the said part 20 thereof. Furthermore, the right-hand part of Figure 5 shows that if the said part 20 is sufficiently narrow or low, the roundings of the edges 29 on either side thereof may overlap one another, in such a manner that a local reduction in the thickness of the starting material occurs. This therefore means that a nominal thickness D0 of a sufficiently wide or high part 20 of the transverse element during stamping remains unchanged with respect to the thickness of the base material 25, while the thickness D1 of a sufficiently narrow or low part 20 decreases as a result of the contraction effect. According to a rule of thumb laid down by the invention, the said reduction in thickness occurs if the width or height dimension of the said part is less than approximately 1.5 times its thickness.
In the above mentioned more detailed embodiment of the invention which makes use of the contraction effect, the height of the lugs 8 is reduced compared to the lugs 8 of the known transverse element 16 in such a way that the said roundings of the edges 29 thereof do indeed overlap one another, as seen in cross section. Figures 6 and 7 illustrate a second and a third embodiment of the transverse element according to the invention, in which the lugs 8 are designed with a reduced height compared to the known transverse element 16, specifically in such a manner that the thickness of the lugs 8 has decreased over a large proportion of their axial or width dimension 8 as a result of the contraction effect described above. This delimits the top contact region 14 in the width direction, the figures with the hatched contact regions 14 and 15 illustrating those parts of the transverse element 16 where the nominal material thickness has remained unchanged. The present embodiment of the transverse element 16 has a beneficial effect on the performance of the drive belt 3, since the mass of the belt 3 is lower on account of the relatively small lugs 8.

According to the present more detailed embodiment of the invention, in which the transverse elements 16 are designed with a relatively small height of the lugs 8, these lugs can be stamped with the aid of an ejector 24 advantageously provided with just one connected and centrally located elevated working-surface part 28, which is of benefit to its feasibility and costs. The working-surface part 28 is then the defining factor for the limitation of the top contact region 14 in the vertical direction, which limitation is in this case advantageously located at virtually the same height as the underside of the lugs 8, and the limitation in the width direction of the bottom two contact regions 15. The limitation in the vertical direction of the bottom two contact regions 15 is in this case, incidentally, defined by the tilting line 9 which forms the transition to the tapering surface 10 in the foot part.

In the embodiment of the transverse element shown in Figure 7, the web part 7 is provided with a shape which tapers in the direction of the foot part, thus creating space for a lower positioning of the boss 6, i.e. a positioning further towards the web part 7. A design of this type enables the head part to be of smaller shape, more particularly to be provided with a flatter upper contour 19. As a result, the lugs 8, which are provided with a low height in accordance with the invention, optimally adjoin the central part of the head part, as is clearly apparent when Figures 6 and 7 are compared. In a design of this nature, a height curve of the head part in the width direction can be considerably reduced, which is of benefit to its production and moreover further reduces the mass of the transverse element 16 and the drive belt 3.

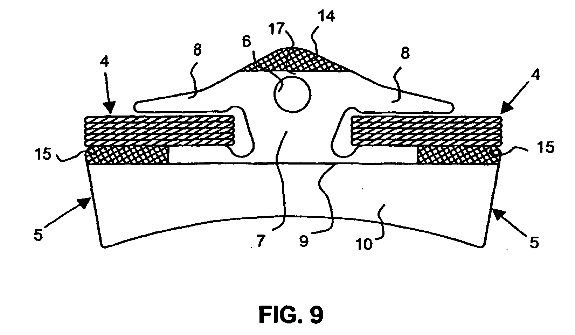

Although in the figures the lower limit of the top contact region 14 lies at virtually the same height as the underside of the lugs 8, it may be preferred for the said lower limit to be located at a higher level, for example at the height of the boss 6 or even above it. This latter feature is illustrated with the transverse element 16 depicted in figure 9 and can be achieved by designing the said elevated working-surface part 28 of the ejector 24 to be correspondingly larger, for example in such a manner that this part 28 extends over the entire web part 7 or even partly into the head part. The said benefit emerges from the geometrically defined property that the further apart the bottom contact regions 15 and the top contact region 14 are located in the vertical direction, the less influence a given absolute deviation in thickness at the location of one of the two regions 14 or 15 has on the ultimate position of two adjacent transverse elements 16 with respect to one another in drive belt 3. In other words, the permissible tolerance in the thickness is increased the further apart the contact regions 14 and 15 lie from one another. Thus, in a preferred embodiment, the said top contact region 14 is located entirely above, i.e. radial outward from, the boss 6, preferably with some space 17 provided there between in radial direction. Hereby, the top contact region 14 will not be disturbed, e.g. raised in part, by the forming of the boss 6 during the stamping process.

Figure 8 shows, in a plan view of a transverse element 16 according to the invention, the thinning which occurs at least over a large part of the lugs 8 and the resulting formation of the top contact region 14. Figure 8 also illustrates an additional favourable effect of the said thinning. The known transverse element 16 is illustrated in the top part of the figure. With elements of this type, it is known that the head part may undesirably adopt a slightly twisted position with respect to the foot part, as shown in the figure. This probably results from the manufacturing process used for the transverse element 16, and more particularly the heat treatments in that process, such as a quenching process used to harden the material. The extent to which a torsion effect of this nature occurs has proven to be able to vary considerably between the transverse elements 16. During use in the drive belt 3, the transverse elements 16 are pressed firmly against one another at least by means of their foot parts, i.e. the distance A1 between them in the peripheral direction is reduced to zero, so that in cases in which the head parts of an adjacent pair of transverse elements 16 have an unequal degree of the torsion effect, a rotation M1 is applied to these head parts in order to allow this pressing-together to take place. The force F required for this rotation M1 arises from the ends 30 of the lugs 8, since that is where the first contact is formed between the adjacent transverse elements 16. This force F leads to undesirable and, moreover, variable stresses in the transverse element 16, and in particular in the lugs 8 and the web part 7 thereof, which stresses may adversely affect the service life of the drive belt 3 as a result of the head part prematurely breaking off from the transverse element 16 or a lug 8 thereof.

It can be seen from the bottom part of Figure 8 that, on account of the fact that the ends of a lug 8 of a transverse element 16 according to the invention are thinner as a result of the contraction effect, the location 31 where the said first contact occurs has been shifted significantly towards the axial centre of the transverse element 16, so that given the same degree of the torsion effect, both the distance A2 between the transverse elements and the rotation M2 applied, and therefore also the stresses, will be considerably and advantageously lower. In this way, a lug 8 shaped in accordance with the invention also has a favourable effect on the service life of a drive belt; in this context, it should be noted that this favourable effect may also be advantageous independently of the use of the three-point bearing in accordance with the invention.

In addition to what has been described above, the invention also relates to all the details in the figures and to what is described in the claims which follow.

## Claims

1. Drive belt (3), in particular for use in a continuously variable transmission, such as for passenger cars, with two driving wheels (1, 2) between which the drive belt (3) is held, which drive belt (3) comprises two continuous carriers (4) on which a large number of transverse elements (16) are held, which transverse elements (16) can move freely at least in the peripheral direction of the carriers (4), the carriers (4) being located in two slot-like cut-outs in the transverse elements (16) with, between them in the width direction, a web part (7), above which there is a head part which comprises two parts or lugs (8) extending freely in the width direction, and beneath which there is a foot part of the transverse element (16), and which transverse elements (16) also comprise main surfaces which are intended to make contact with one another, three contact regions (14, 15) with a greater thickness than other parts of the main surface (16) being defined on at least one of the main surfaces, via which contact regions (14, 15) geometrically defined stable contact between adjacent transverse elements (16) is possible, whereby a first or top contact region (14) is located at least substantially in the head part and, as seen in the width direction, is located centrally on the transverse element (16), and whereby the remaining two, or bottom contact regions (15) are located at least substantially in the foot part, **characterised in that** the top contact region (14), as seen in the width direction, extends between, but not into the lugs (8).

2. Drive belt (3) according to Claim 1, **characterised in that** the thickness of the transverse element (16) at the location of the top contact region (14) is slightly greater than the thickness at the location of the bottom two contact regions (15).

3. Drive belt (3) according to Claim 1 or 2, **characterised in that** a difference in the thickness of the transverse element (16) at the location of the contact regions (14, 15) and at the location of the above mentioned other parts is within the range from 10 to 200 micrometers, preferably less than 100 micrometers.

4. Drive belt (3) according to Claim 1, 2 or 3, in which the transverse element (16) in the head part is provided with a boss (6) projecting out of the said main surface, **characterised in that** the top contact region (14) at least largely surrounds boss (6).

5. Drive belt (3) according to Claim 1, 2 or 3, in which the transverse element (16) in the head part is provided with a boss (6) projecting out of the said main surface, **characterised in that** the top contact region (14), in the vertical direction, is located above the boss (6).

6. Drive belt (3) according to one or more of the preceding claims, **characterised in that** the top contact region (14), in the vertical direction, is located in the immediate vicinity of an upper contour (19) of the transverse element (16).

7. Drive belt (3) according to one or more of the preceding claims, **characterised in that** the top contact region (14), as seen in the width direction, approximately extends the width of the web part (7).

8. Drive belt (3) according to one or more of the preceding claims, **characterised in that** the two bottom contact regions (15) are each located in the immediate vicinity of an axially oriented side face (5) of the transverse element (16).

9. Drive belt (3) according to one or more of the preceding claims, **characterised in that** the two bottom contact regions (15), in the width direction, each extend over more than half the width of a carrier (4), preferably over a distance which is virtually equal to this width.

10. Drive belt (3) according to one or more of the preceding claims, **characterised in that** the two bottom contact regions (15) are separated from one another at least over the width of the web part (7).

11. Drive belt (3) according to one or more of the preceding claims, **characterised in that** the height of the lugs (8) is such that a material contraction (29) resulting from a stamping process which is used to form the transverse element (16) extends over more than half the width of the lug (8), preferably over the entire width thereof.

12. Drive belt (3) according to one or more of the preceding claims, **characterised in that** the height of the lug (8) at least outside the top contact region (14) is less than or equal to 1.5 times the local thickness of the transverse element (16).

13. Drive belt (3) according to one or more of the preceding claims, **characterised in that** the upper contour (19) is substantially S-shaped in profile at the location of a lug (8).

14. Stamping device for stamping transverse elements (16) which are suitable for use in the drive belt according to one of the preceding claims, which device is provided with an ejector (24), the outer contour of which describes at least part of the outer contour of the transverse element (16), which ejector (24) is provided with a working surface (26) which is intended for contact with the transverse element (16) and in which at least one working-surface part (27, 28) located at an elevated position is incorporated, so that during stamping of the transverse element (16) the latter is locally provided with one or more thinned sections via displacement of material.

## Patentansprüche

1. Treibriemen (3), insbesondere zur Verwendung in einem kontinuielich veränderbaren Getriebe, wie die.für Personenkraftwagen, mit zwei Antriebsrädern (1, 2), zwischen denen der Treibriemen (3) gehalten wird, wobei der Treibriemen (3) zwei kontinuierliche Träger (4) enthält, auf denen eine große Anzahl Querelemente (16) gehalten wird, wobei die Querelemente (16) sich frei zumindest in Umfangsrichtung der Träger (4) bewegen können, wobei die Träger (4) in zwei schlitzförmigen Ausschnitten in den Querelementen (16) angeordnet sind mit einem zwischen ihnen in Breitenrichtung befindlichen Bahnteil (7), über dem sich ein Kopfteil befindet, das zwei Teile oder Ansätze (8) enthält, die sich frei in Breitenrichtung erstrecken, und unter dem sich ein Fußteil des Querelements (16) befindet, und wobei die Querelemente (16) auch zum gegenzeitigen Kontakt bestimmte Hauptflächen enthalten, drei Kontaktbereiche (14, 15) mit einer größeren Dicke als andere Teile der Hauptfläche auf wenigstens einer der Hauptflächen definiert sind, mittels der Kontaktbereiche (14, 15) ist geometrisch definierter stabiler Kontakt zwischen den benachbarten Querelementen (16) möglich, wobei ein erster oder oberer Kontaktbereich (14) zumindest im Wesentlichen in dem Kopfteil angeordnet ist und, in Breitenrichtung gesehen, mittig auf dem Querelement (16) angeordnet ist, und wodurch die verbleibenden zwei oder unteren Kontaktbereiche (15) zumindest im Wesentlichen in dem Fußteil angeordnet sind, **dadurch gekennzeichnet, dass** sich der obere Kontaktbereich (14), in Breitenrichtung gesehen, zwischen den Ansätzen (8), aber nicht in sie erstreckt.

2. Treibriemen (3) nach Anspruch 1, **dadurch gekennzeichnet, dass** die Dicke des Querelements (16) an der Stelle des oberen Kontaktbereichs (14) etwas größer ist als die Dicke an der Stelle der unteren beiden Kontaktbereiche (15).

3. Treibriemen (3) nach Anspruch 1 oder 2, **dadurch gekennzeichnet, dass** ein Unterschied in der Dicke des Querelements (16) an der Stelle der Kontaktbereiche (14, 15) und an der Stelle der oben genannten anderen Teilen im Bereich von 10 bis 200 µm, vorzugsweise von weniger als 100 µm besteht.

4. Treibriemen (3) nach Anspruch 1, 2 oder 3, bei dem das Querelement (16) im Kopfteil mit einem Vorsprung (6) versehen ist, der aus der Hauptfläche herausragt, **dadurch gekennzeichnet, dass** der obere Kontaktbereich (14) den Vorsprung (6) zumindest größtenteils umgibt.

5. Treibriemen (3) nach Anspruch 1, 2 oder 3, bei dem das Querelement (16) im Kopfteil mit einem Vorsprung (6) versehen ist, der aus der Hauptfläche herausragt, **dadurch gekennzeichnet, dass** der obere Kontaktbereich (14) in vertikaler Richtung über dem Vorsprung (6) angeordnet ist.

6. Treibriemen (3) nach einem oder mehreren der vorhergehenden Ansprüche, **dadurch gekennzeichnet, dass** der obere Kontaktbereich (14) in vertikaler Richtung in unmittelbarer Nähe zu einem oberen Umriss (19) des Querelements (16) angeordnet ist.

7. Treibriemen (3) nach einem oder mehreren der vorhergehender Ansprüche, **dadurch gekennzeichnet, dass** der obere Kontaktbereich (14), in Breitenrichtung gesehen, etwa über die Breite des Bahnteils (7) verläuft.

8. Treibriemen (3) nach einem oder mehreren der vorhergehender Ansprüche, **dadurch gekennzeichnet, dass** die beiden unteren Kontaktbereiche (15) jeweils in unmittelbarer Nähe zu einer axial ausgerichteten Seitenfläche (5) des Querelements (16) angeordnet sind.

9. Treibriemen (3) nach einem oder mehreren der vorhergehenden Ansprüche, **dadurch gekennzeichnet, dass** sich die beiden unteren Kontaktbereiche (15) in Breitenrichtung jeweils über mehr als die halbe Breite eines Trägers (4) erstrecken, vorzugsweise über eine Entfernung, die nahezu gleich dieser Breite is.

10. Treibriemen (3) nach einem oder mehreren der vorhergehender Ansprüche, **dadurch gekennzeichnet, dass** die beiden unteren Kontaktbereich (15) zumindest über die Breite des Bahnteils (7) voneinander getrennt sind.

11. Treibriemen (3) nach einem oder mehreren der vorhergehender Ansprüche, **dadurch gekennzeichnet, dass** die Höhe der Ansätze (8) so ausgelegt ist, dass eine Materialkontraktion (29), die sich durch einen zur Bildung des Querelements (16) verwendeten Pressvorgang ergibt, sich über mehr als die halbe Breite des Ansatzes (8) erstreckt, vorzugsweise über dessen gesamte Breite.

12. Treibriemen (3) nach einem oder mehreren der vorhergehender Ansprüche, **dadurch gekennzeichnet, dass** die Höhe des Ansatzes (8) zumindest außerhalb des oberen Kontaktbereichs (14) weniger oder gleich dem 1,5-fachen der lokalen Dicke des Querelements (16) ist.

13. Treibriemen (3) nach einem oder mehreren der vorhergehender Ansprüche, **dadurch gekennzeichnet, dass** der obere Umriss (19) an der Stelle eines Ansatzes (8) im Wesentlichen S-förmig im profil ist.

14. Stansvorrichtung zum Stanzen von Querelementen (16) zur Verwendung in einem Treibriemen nach einem der vorhergehenden Ansprüche, wobei die Vorrichtung mit einem Auswerfer (24) ausgestattet ist, dessen äußerer Umriss zumindest einen Teil des äußeren Umrisses des Querelements (16) beschreibt, wobei der Auswerfer (24) mit einer Arbeitsfläche (26) versehen ist, die zum Kontakt mit dem Querelement (16) bestimmt ist und in der zumindest ein an einer erhöhten Stelle befindlicher Arbeitsflächenteil (27, 28) enthalten ist, so dass letzterer während des Stanzens des Querelements (16) mit einer oder mehreren verdünnten Bereichen mittels Materialverschiebung lokal ausgestattet ist.

## Revendications

1. Courroie de transmission (3), en particulier pour une utilisation dans une transmission à variation continue, telle que pour des voitures particulières, comprenant deux roues de transmission (1, 2) entre lesquelles est maintenue la courroie de transmission (3), cette courroie de transmission (3) comprenant deux supports continus (4) sur lesquels est maintenu un grand nombre d'éléments transversaux (16), ces éléments transversaux (16) pouvant se déplacer librement au moins dans la direction périphérique des supports (4), les supports (4) étant situés dans deux découpes en forme de fentes ménagées dans les éléments transversaux (16) avec, entre celles-ci et dans le sens de la largeur, une pièce de toile (7) au-dessus de laquelle se trouve une partie de tête qui comprend deux parties ou oreilles (8) s'étendant librement dans le sens de la largeur, et en dessous de laquelle se trouve une partie de pied de l'élément transversal (16), et ces éléments transversaux (16) comprenant également des surfaces principales destinées à être en contact les unes avec les autres, avec trois zones de contact (14, 15) ayant une épaisseur supérieure à d'autres parties de la surface principale (16) et définies sur au moins une des surfaces principales, et ces zones de contact (14, 15) permettant d'avoir un contact stable géométriquement défini entre des éléments transversaux adjacents (16), une première zone de contact ou zone de contact supérieure (14) étant située au moins pour l'essentiel dans la partie de tête et, vue dans le sens de la largeur, centralement sur l'élément transversal (16), alors que les deux autres zones de contact inférieures (15) sont situées au moins pour l'essentiel dans la partie du pied, **caractérisée en ce que** la zone de contact supérieure (14), considérée dans le sens de la largeur, s'étend entre les oreilles (8) mais pas dans celles-ci.

2. Courroie de transmission (3) selon la revendication 1, **caractérisée en ce que** l'épaisseur de l'élément transversal (16) à l'endroit de la zone de contact supérieure (14) est légèrement, supérieure à l'épaisseur à l'endroit des deux zones de contact inférieures (15) .

3. Courroie de transmission (3) selon la revendication 1 ou 2, **caractérisée en ce que** la différence d'épaisseur de l'élément transversal (16) à l'endroit des zones de contact (14, 15) et à l'endroit des autres parties susmentionnées est située dans la plage comprise entre 10 et 200 micromètres, de préférence inférieure à 100 micromètres.

4. Courroie de transmission (3) selon la revendication 1, 2 ou 3, dans laquelle l'élément transversal (16) dans la partie de la tête est pourvu d'un bossage (6) se projetant hors de la surface principale, **caractérisée en ce que** la zone de contact supérieure (14) entoure au moins largement le bossage (6).

5. Courroie de transmission (3) selon la revendication 1, 2 ou 3, dans laquelle l'élément transversal (16) dans la partie de la tête est pourvu d'un bossage (6) se projetant hors de la surface principale, **caractérisée en ce que** la zone de contact supérieure (14), dans la direction verticale, est située au-dessus du bossage (6).

6. Courroie de transmission (3) selon une ou plusieurs des revendications précédentes, **caractérisée en ce que** la zone de contact supérieure (14), dans la direction verticale, est située à proximité immédiate d'un contour supérieur (19) de l' élément transversal (16).

7. Courroie de transmission (3) selon une ou plusieurs des revendications précédentes, **caractérisée en ce que** la zone de contact supérieure (14), considérée dans le sens de la largeur, s'étend approximativement sur la largeur de la pièce de toile (7).

8. Courroie de transmission (3) selon une ou plusieurs des revendications précédentes, **caractérisée en ce que** les deux zones de contact inférieures (15) sont chacune situées à proximité immédiate d'une face latérale orientée axialement (5) de l'élément transversal (16).

9. Courroie de transmission (3) selon une ou plusieurs des revendications précédentes, **caractérisée en ce que** les deux zones de contact inférieures (15), dans le sens de la largeur, s'étendent chacune sur plus de la moitié de la largeur d'un support (4), de préférence sur une distance virtuellement égale à cette largeur.

10. Courroie de transmission (3) selon une ou plusieurs des revendications précédentes, **caractérisée en ce que** les deux zones de contact inférieures (15) sont séparées l'une de l'autre au moins sur la largeur de la pièce de toile (7).

11. Courroie de transmission (3) selon une ou plusieurs des revendications précédentes, **caractérisée en ce que** la hauteur des oreilles (8) est telle qu'une contraction matérielle (29) résultant d'un processus d'estampage utilisé pour former l'élément transversal (16) s'étend sur plus de la moitié de la largeur de l'oreille (8), de préférence sur toute la largeur de celle-ci.

12. Courroie de transmission (3) selon une ou plusieurs des revendications précédentes, **caractérisée en ce que** la hauteur de l'oreille (8) au moins à l'extérieur de la zone de contact supérieure (14) est inférieure ou égale à 1,5 fois l'épaisseur locale de l'élément transversal (16).

13. Courroie de transmission (3) selon une ou plusieurs des revendications précédentes, **caractérisée en ce que** le contour supérieur (19) a pour l'essentiel une forme en S en profile à l'endroit d'une oreille (8).

14. Dispositif d'estampage pour estamper des éléments transversaux (16) appropriés pour une utilisation dans la courroie de transmission selon l'une des revendications précédentes, pourvu d'un éjecteur (24) dont le contour extérieur décrit au moins une partie du contour extérieur de l'élément transversal (16), cet éjecteur (24) étant muni d'une surface de travail (26) destinée être en contact avec l'élément transversal (16) et dans laquelle est intégré au moins une partie de la surface de travail (27, 28) située dans une exposition élevée, de sorte que, pendant l'estampage de l'élément transversal (16), ce dernier est localement pourvu d'une de plusieurs sections allongées par le déplacement de matériau.
